Europäisches Patentamt

European Patent Office

Office européen des brevets

(19)

(11) Veröffentlichungsnummer: **0 338 339 B1**

(12) **EUROPÄISCHE PATENTSCHRIFT**

(45) Veröffentlichungstag der Patentschrift: **16.12.92**

(51) Int. Cl.5: **H02B 1/26**

(21) Anmeldenummer: **89106094.9**

(22) Anmeldetag: **07.04.89**

(54) **Sichtfenster für einen Schaltschrank oder einen Baugruppenträger.**

(30) Priorität: **19.04.88 DE 3813003**

(43) Veröffentlichungstag der Anmeldung:
**25.10.89 Patentblatt 89/43**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**EP-A- 0 116 705**
**DE-A- 3 144 131**

(73) Patentinhaber: **Rittal-Werk Rudolf Loh GmbH & Co. KG**
**Auf dem Stützelberg**
**W-6348 Herborn(DE)**

(72) Erfinder: **Bovermann, Klaus-Dieter**
**Am Oberg 7**
**W-3565 Breidenbach-Niederdieten(DE)**
Erfinder: **Wetzel, Manfred**
**Am Ebersbach 57**
**W-6344 Dietzhölztal-Ewersbach(DE)**

(74) Vertreter: **Vogel, Georg**
**Pat.-Ing. Georg Vogel Hermann-Essig-Strasse 35**
**W-7141 Schwieberdingen(DE)**

## Beschreibung

Die Erfindung betrifft ein Sichtfenster für eine Öffnung eines Schaltschrankes oder Baugruppenträgers mit einer U-förmigen durchsichtigen Scheibe aus Frontplatte und zwei Seitenplatten, die zumindest an den beiden Stirnseiten mit Rahmenteilen verbunden ist. (Siehe DE-A-3 144 131)

Derartige Sichtfenster werden dazu verwendet, Öffnungen an einem Schaltschrank oder die Öffnung an der Vorderseite eines Baugruppenträgers so abzudecken, daß die im Bereich der Öffnung liegenden Bauteile, wie Anzeige- und Bedienungselemente, eingesehen werden können. Dabei kann das Sichtfenster fest mit der die Öffnung umschließenden Wand verbunden sein oder an dieser Wand über ein Rahmenteil angelenkt sein, während das andere Rahmenteil einen Verschluß trägt, mit dem die Schließstellung des Sichtfensters arretiert werden kann. Gerade bei der letztgenannten Ausgestaltung des Sichtfensters sind komplizierte und teuere Rahmenteile für das Sichtfenster erforderlich, die zudem einen erheblichen Teile- und Montageaufwand erfordern.

Es ist Aufgabe der Erfindung, für ein Sichtfenster der eingangs erwähnten Art Rahmenteile zu schaffen, die sowohl für die feste als auch die angelenkte Verbindung mit einem Schaltschrank oder einem Baugruppenträger verwendbar sind, einfache Teile umfassen, die auch an unterschiedliche Größen des Sichtfensters anpaßbar sind und schnell und leicht an der Scheibe des Sichtfensters angebracht werden können.

Diese Aufgabe wird nach der Erfindung dadurch gelöst, daß die Rahmenteile jeweils aus einem Anschlußprofilabschnitt und einem darauf aufrastbaren U-förmigen Abdeckprofilabschnitt zusammengesetzt sind, deren Längen dem lichten Abstand der Seitenplatten der Scheibe entsprechen, daß der Anschlußprofilabschnitt eine Aufnahmenut zum Aufstecken auf die Stirnseite der Frontplatte der Scheibe aufweist, daß der Anschlußabschnitt und der aufgerastete Abdeckprofilabschnitt eine durchgehende Längskammer bilden und daß auf die Stirnseiten der Seitenplatten der Scheibe mit einer Aufnahmenut versehene Eckstücke aufgesteckt sind, die mit Halteansätzen in die Längskammer der Rahmenteile ragen und darin gehalten sind.

Bei dieser Ausgestaltung brauchen nur die Anschlußprofilabschnitte mit der Frontplatte der Scheibe verbunden zu werden. Dies kann einmal dadurch erfolgen, daß die Anschlußprofilabschnitte im Bereich ihrer Aufnahmenut mit der Frontplatte der Scheibe verklebt sind und zum anderen dadurch, daß die Anschlußprofilabschnitte im Bereich ihrer Aufnahmenut mit Bohrungen versehen sind, die mit Bohrungen in der Frontplatte der Scheibe fluchten, und daß die Frontplatte der Scheibe und der Anschlußprofilabschnitt über die fluchtenden Bohrungen miteinander verbunden, vorzugsweise verstiftet oder verschraubt sind. Dann werden die Eckstücke auf die Stirnseiten der Seitenplatten der Scheibe aufgesteckt und die Abdeckprofilabschnitte auf die Anschlußprofilabschnitte aufgerastet. Dabei werden dann die Eckstücke unverlierbar gehalten, da die Halteansätze in der vervollständigten Längskammer des Rahmenteils quer zu den Rahmenteilen festgehalten werden und die Seitenplatten der Scheibe, die in den Aufnahmenuten der Eckstücke gehalten sind, ein Entfernen der Eckstücke in Längsrichtung der Rahmenteile verhindern. Da der Anschlußprofilabschnitt und der Abdeckprofilabschnitt von einem Profilstrang in der gewünschten Länge abgelängt werden können, ist die Anpassung an unterschiedliche Größen des Sichtfensters kein Problem. Die Eckstücke bleiben dabei unverändert.

Die Ausgestaltung ist dabei so vorgenommen, daß der Anschlußprofilabschnitt aus einer Grundplatte besteht, die an einer Längsseite die durch Abwinkelungen gebildete Aufnahmenut trägt, daß die Öffnung der Aufnahmenut etwa in der Ebene der Grundplatte liegt, und daß die Grundplatte im Bereich der anderen Längsseite einen angeformten Raststeg mit Rastansatz am freien Ende aufweist.

Ein mit diesem Anschlußprofilabschnitt schnell und leicht verrastbarer Abdeckprofilabschnitt ist dadurch gekennzeichnet, daß er mit einem Seitenschenkel die auf die Vorderseite der Frontplatte der Scheibe liegende Abwinkelung der Aufnahmenut übergreift und mit einem Haltesteg dessen Stirnseite hintergreift und daß der andere Seitenschenkel des Abdeckprofilabschnittes eine Rastaufnahme für den Rastansatz des Raststeges des Anschlußprofilabschnittes aufweist.

Die Rastendstellung wird dabei dadurch festgelegt, daß der Abdeckprofilabschnitt auf seiner Innenseite einen angeformten Stützsteg aufweist, der sich auf der Basisabwinkelung der Aufnahmenut des Anschlußprofilabschnittes abstützt und daß sich der Seitenschenkel mit der Rastaufnahme des Abdeckprofilabschnittes nach dem Verrasten mit dem Raststeg des Anschlußabschnittes an der Grundplatte des Anschlußprofilabschnittes abstützt.

Nach einer weiteren Ausgestaltung ist aus ästhetischen Gesichtspunkten vorgesehen, daß die der Vorderseite der Scheibe zugekehrte Kante zwischen dem Seitenschenkel und den Basisschenkel des Abdeckprofilabschnittes abgeschrägt ist und daß sich diese Abschrägung über die angebrachten Eckstücke fortsetzt. Damit sich die abgeschrägte Form auch über die Eckstücke fortsetzt, sieht eine weitere Ausgestaltung vor, daß die Eckstücke auf den der Außenseite des Basisschenkels des Abdeckprofilabschnittes zugekehrten Seiten sich bündig anschließen und sich über den abgeschrägten Übergangsbereich des Abdeckprofilabschnittes verjüngen und entsprechend abgeschrägt sind.

Ist nach einer weiteren Ausgestaltung vorgesehen, daß der Abdeckprofilabschnitt im Bereich seines Basisschenkels über den Seitenschenkel mit der Rastaufnahme hinaus verlängert ist und eine Bohrung aufweist, dann ist eine Anbringungsmöglichkeit für Scharniere geschaffen.

Ein bündiger Abschluß der Rahmenteile zur Scheibe hin wird dadurch erreicht, daß der Haltesteg des Seitenschenkels des Abdeckprofilabschnittes nach dem Aufrasten des Abdeckprofilabschnittes auf den Anschlußprofilabschnitt bündig mit der dem Raststeg abgekehrten Innenseite der Grundplatte des Anschlußprofilabschnittes abschließt. Dieser Abschluß wird bis zu den freien Kanten der Seitenplatten der Scheibe dadurch erreicht, daß die Grundplatte des Anschlußprofilabschnittes über den Raststeg und über die Verlängerung mit der durchgehenden Bohrung des Basisschenkels des Abdeckprofilabschnittes hinaus bis zum freien Rand der Seitenplatten der Scheibe verlängert ist und mit diesem bündig abschließt. Der Abdeckprofilabschnitt braucht nicht immer eine Breite aufzuweisen, die der Breite der Seitenplatten entspricht, wenn sich das Sichtfenster zum Teil in die Öffnung des Schaltschrankes oder des Baugruppenträgers hinein erstreckt.

Eine weitere Ausgestaltung sieht aus ästhetischen Gründen vor, daß die Außenseite des Basisschenkels des Abdeckprofilabschnittes in gleichmäßigen Abständen längsgerichtete Nuten aufweist.

Bei einem angelenkten Sichtfenster ist die Ausgestaltung in vorteilhafter Weise so getroffen, daß in den Basisschenkel des Abdeckprofilabschnittes des einen Rahmenteils der Verschluß eingesetzt ist, der einen Schließzylinder mit Drehriegel aufweist, daß der Drehriegel mit einem in einer die Öffnung begrenzenden Seitenwand festgelegten Schließbolzen zusammenarbeitet, daß in der Verlängerung des Basisschenkels des Abdeckprofilabschnittes des anderen Rahmenteils Lagerbolzen für winkelförmige Scharnierteile eingebracht sind, die damit schwenkbar an dem Abdeckprofilabschnitt gelagert sind, und daß die Scharnierteile an einer die Öffnung begrenzenden Seitenwand befestigt sind. Der Verschluß wird dabei in eine Ausnehmung eingesetzt, die an jeder beliebigen Stelle des Basisschenkels des Abdeckprofilabschnittes eingebracht werden kann. Ist die Bohrung in die Endabschnitte der Verlängerung des Basisschenkels eingebracht, dann lassen sich die Scharnierteile auf einfache Weise an dem Abdeckprofilabschnitt anlenken. Dabei kann die Verlängerung des Basisschenkels des Abdeckprofilabschnittes im Bereich der Scharniere auch ausgespart sein, wenn man einen großen Schwenkwinkel für das Sichtfenster erreichen will.

Die Erfindung wird anhand eines in den Zeichnungen dargestellten Ausführungsbeispiels näher erläutert. Es zeigt:

Fig. 1 in perspektivischer Ansicht ein an einem Baugruppenträger angelenktes Sichtfenster, wobei auf der Schließseite das Rahmenteil mit den einzelnen Teilen in Explosionsdarstellung wiedergegeben ist,

Fig. 2 eine Teilansicht, die den Rastvorgang zwischen dem Abdeckprofilabschnitt und dem Anschlußprofilabschnitt wiedergibt,

Fig. 3 im Querschnitt die Schließseite des Sichtfensters in der Schließstellung des Verschlusses und

Fig. 4 im Querschnitt die Anlenkseite des Sichtfensters ebenfalls in der Schließstellung.

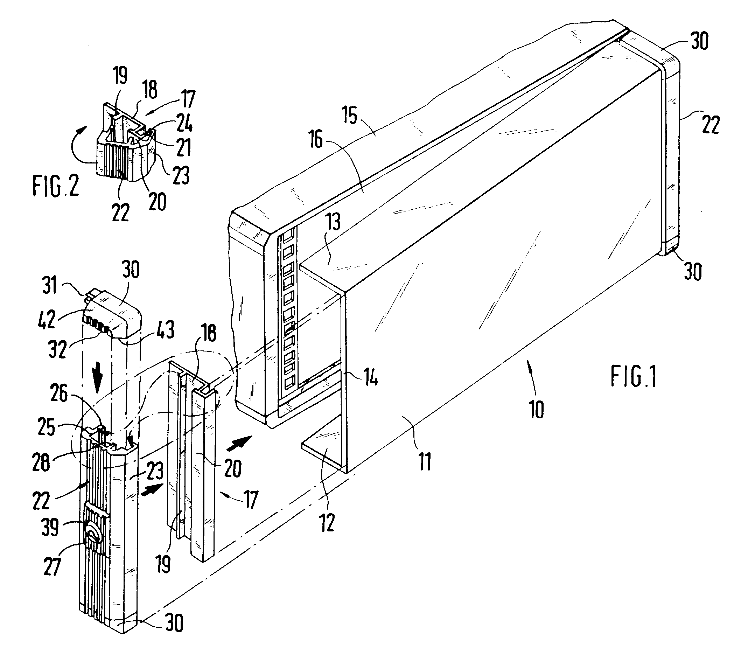

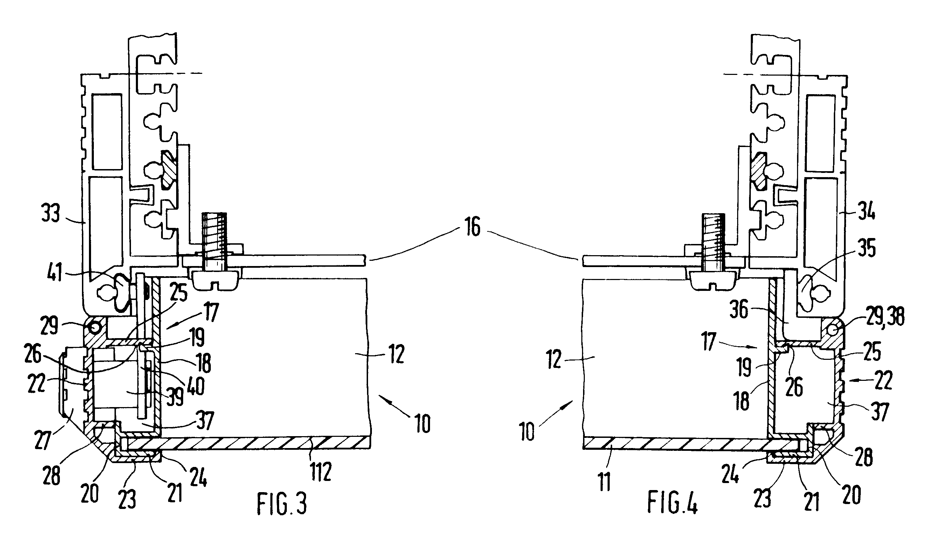

In der Fig. 1 ist von dem Baugruppenträger 15 nur der Teil um die vorderseitige Öffnung 16 gezeigt. Dabei ist zu erkennen, daß die Eckkanten des Baugruppenträgers 15 abgeschrägt sind. Auf der Anlenkseite ist das vertikal gerichtete Rahmenteil in der zusammengesetzten und an der Scheibe 10 angebrachten Stellung gezeigt, wobei nur noch der Abdeckprofilabschnitt 22 und die beiden Eckstücke 30 an der U-förmigen, durchsichtigen Scheibe 10 erkennbar sind. Die Scheibe 10 wird durch die Frontplatte 11 und die beiden Seitenplatten 12 und 13 gebildet, die einstückig miteinander verbunden sind. An der linken Stirnseite 14 der Scheibe 10 ist das Rahmenteil noch nicht angebracht. Es sind jedoch die Teile in Explosionsdarstellung gezeigt, die für das Rahmenteil erforderlich sind. Zuerst wird der Anschlußprofilabschnitt 17 mit der Stirnseite der Scheibe 10 verbunden. Der Anschlußprofilabschnitt 17 ist in einer Länge abgelängt, die dem lichten Abstand der Seitenplatten 12 und 13 der Scheibe 10 entspricht. Die Grundplatte 18 des Anschlußprofilabschnittes 17 weist an der vorderen Längskante die Aufnahmenut 20 auf, die durch entsprechende Abwinkelungen gebildet ist. Im Bereich der anderen Längsseite ist an die Grundplatte 18 der Raststeg 19 angeformt, der zur zugeordneten Längsseite hin einen durchgehenden Rastansatz aufweist. Die Grundplatte 18 wird mit der Aufnahmenut 20 auf die Stirnseite 14 der Frontplatte 11 aufgesteckt, wobei sie in den Bereich zwischen die beiden Seitenplatten 12 und 13 eingeführt wird und mit dem über den Raststeg 19 hinaus verlängerten Teil bündig mit den freien Kanten der Seitenplatten 12 und 13 der Scheibe 10 abschließt. Die Frontplatte 11 kann dabei durch Verkleben in der Aufnahmenut 20 des Anschlußprofilabschnittes 17 festgelegt sein. Die Frontplatte 11 und die Abwinkelungen der Aufnahmenut 20 können auch fluchtende Bohrungen aufweisen, über die beide Teile miteinander verschraubt oder verstiftet werden können. Ist der Anschlußprofilabschnitt 17 an der Scheibe 10 festgelegt, dann werden die Eckstücke 30 auf die Stirnseiten 14 der Seitenplatten 12 und 13 aufgesteckt. Die den Seitenplatten 12 und 13 der Scheibe 10 zugekehrten Seiten der Eckstücke 30 tragen ebenfalls Aufnahmenuten für die Seitenplatten 12 und 13, die wie aus Fig. 1 zu entnehmen ist, ebenfalls bis zu den freien Kanten der Seitenplatten 12 und 13 reichen. Die auf die Seitenplatten 12 und 13 aufgesteckten Eckstücke 30 sind in Längsrichtung des Anschlußprofilabschnittes 17 damit schon gehalten. Auf den Anschlußprofilabschnitt 17 wird dann der U-förmige Abdeckprofilabschnitt 22 aufgerastet. Der vordere Seitenschenkel 23 desselben läuft in den nach innen gerichteten Haltesteg 24 aus, der auf die Stirnseite der äußeren Abwinkelung 21 der Aufnahmenut 20 des Anschlußprofilabschnittes 17 aufgesetzt wird. Dann wird der innere Seitenschenkel 25 des Abdeckprofilabschnittes 22 auf den Raststeg 19 des Anschlußprofilabschnittes 17 aufgerastet, wie Fig. 2 andeutet. Dabei rastet der nach außen abstehende Rastansatz des Raststeges 19 in die auf der Innenseite des inneren Seitenschenkels 25 durchgehende Rastaufnahme 26 ein. Damit wird zwischen dem Anschlußprofilabschnitt 17 und dem Abdeckprofilabschnitt 22 die durchgehende Längskammer 37 (Fig. 4) vervollständigt. An den Eckstücken 30 sind Halteansätze 32 angeformt, die in diese Längskammer 37 ragen und nach dem Verrasten von Anschlußprofilabschnitt 17 und Abdeckprofilabschnitt 22 darin quer zum Rahmenteil unverlierbar gehalten sind.

Wie der Schnitt nach Fig. 3 zeigt, stützt sich nach dem Verrasten der Stützsteg 28, der auf der Innenseite des Basisschenkels des Abdeckprofilabschnittes 22 angeformt ist, auf der Basisabwinkelung der Aufnahmenut 20 des Anschlußprofilabschnittes 17 ab. Auch der innere Seitenschenkel 25 begrenzt durch Anlage an der Außenseite der Grundplatte 18 des Anschlußprofilabschnittes 17 die Aufrastbewegung des Abdeckprofilabschnittes 22. Der Übergang von dem äußeren Seitenschenkel 23 zum Basisschenkel des Abdeckprofilabschnittes 22 ist abgeschrägt, wie der Schnitt nach Fig. 3 deutlich zeigt. Daher ist auch die anschließende Seite 43 der Eckstücke 30 entsprechend abgeschrägt. Außerdem geht die an die Außenseite des Basisschenkels des Abdeckprofilabschnittes 22 zunächst bündig anschließende Seite der Eckstücke 30 in abgeschrägte Übergangsabschnitte 42 über, die in der Schließstellung des Sichtfensters bündig an die abgeschrägten Eckkanten des Baugruppenträgers 15 anschließen.

In den Basisschenkel des Abdeckprofilabschnittes 22, der auf seiner Außenseite mit einer Anzahl in gleichmäßigen Abständen eingebrachten, längsgerichteten Nuten versehen ist, ist der Verschluß eingebracht.

In eine Ausnehmung des Basisschenkels ist das Zylinderschloß 39 eingebracht, das in die Schloßplatte 27 eingesetzt ist und in die Längskammer 37 des Rahmenteils ragt und dort den Drehriegel 40 trägt. Der Drehriegel 40 ist über eine Aussparung des inneren Seitenschenkels 25 des Abdeckprofilabschnittes 22 aus der Längskammer 37 herausgeführt und arbeitet mit dem Schließbolzen 41 zusammen, der an der die Öffnung 16 begrenzenden Seitenwand 33 des Baugruppenträgers festgelegt ist.

In Fig. 4 ist die Anlenkseite des Sichtfensters im Schnitt gezeigt. Die Verlängerung des Basisschenkels des Abdeckprofilabschnittes 22 kann zumindest in den beiden Endabschnitten eingebrachte Bohrungen 29 für Scharnierbolzen 38 aufweisen. Die Bohrung 29 kann jedoch auch durchgehend sein. An der zugekehrten Seitenwand 34 des Baugruppenträgers sind winkelförmige Scharniere 36 befestigt, wie die Befestigungsstelle 35 andeutet. Diese Scharniere 36 ragen in Aussparungen der Verlängerung des Basisschenkels des Abdeckprofilabschnittes 22 und tragen mit den Bohrungen 29 fluchtende Bohrungen, so daß die in die Bohrungen eingeführten Scharnierbolzen 38 die gelenkige Verbindung zwischen den Scharnieren 36 und dem Abdeckprofilabschnitt 22 und damit dem Rahmenteil mit dem Sichtfenster herstellen können.

**Patentansprüche**

1.  Sichtfenster für eine Öffnung (16) eines Schaltschrankes oder Baugruppenträgers (15) mit einer U-förmigen durchsichtigen Schiebe (10) aus Frontplatte (11) und zwei Seitenplatten (12,13), die zumindest an den beiden Stirnseiten (14) mit Rahmenteilen verbunden ist, dadurch gekennzeichnet,
    daß die Rahmenteile jeweils aus einem Anschlußprofilabschnitt (17) und einem darauf aufrastbaren U-förmigen Abdeckprofilabschnitt (22) zusammengesetzt sind, deren Längen dem lichten Abstand der Seitenplatten (12,13) der Scheibe (10) entsprechen,
    daß der Anschlußprofilabschnitt (17) eine Aufnahmenut (20) zum Aufstecken auf die Stirnseite (14) der Frontplatte (11) der Scheibe (10) aufweist,
    daß der Anschlußabschnitt (17) und der aufgerastete Abdeckprofilabschnitt (22) eine durchgehende Längskammer (37) bilden und
    daß auf die Stirnseiten der Seitenplatten (12,13) der Scheibe (10) mit einer Aufnahmenut (31) versehene Eckstücke (30) aufgesteckt sind, die mit Halteansätzen (32) in die Längskammer (37) der Rahmenteile ragen und darin gehalten sind.

2. Sichtfenster nach Anspruch 1,
dadurch gekennzeichnet,
daß der Anschlußprofilabschnitt (17) aus einer Grundplatte (18) besteht, die an einer Längsseite die durch Abwinkelungen gebildete Aufnahmenut (20) trägt,
daß die Öffnung der Aufnahmenut (20) etwa in der Ebene der Grundplatte (18) liegt, und
daß die Grundplatte (18) im Bereich der anderen Längsseite einen angeformten Raststeg (19) mit Rastansatz am freien Ende aufweist.

3. Sichtfenster nach Anspruch 1 oder 2,
dadurch gekennzeichnet,
daß der Abdeckprofilabschnitt (22) mit einem Seitenschenkel (23) die auf die Vorderseite der Frontplatte (11) der Scheibe (10) liegende Abwinkelung (21) der Aufnahmenut (20) übergreift und mit einem Haltesteg (24) dessen Stirnseite hintergreift und
daß der andere Seitenschenkel (25) des Abdeckprofilabschnittes (22) eine Rastaufnahme (26) für den Rastansatz des Raststeges (19) des Anschlußprofilabschnittes (17) aufweist.

4. Sichtfenster nach einem der Ansprüche 1 bis 3,
dadurch gekennzeichnet,
daß der Abdeckprofilabschnitt (22) auf seiner Innenseite einen angeformten Stützsteg (28) aufweist, der sich auf der Basisabwinkelung der Aufnahmenut (20) des Anschlußprofilabschnittes (17) abstützt und
daß sich der Seitenschenkel (25) mit der Rastaufnahme (26) des Abdeckprofilabschnittes (22) nach dem Verrasten mit dem Raststeg (19) des Anschlußabschnittes (17) an der Grundplatte (18) des Anschlußprofilabschnittes (18) abstützt.

5. Sichtfenster nach einem der Ansprüche 1 bis 4,
dadurch gekennzeichnet,
daß die der Vorderseite der Scheibe (10) zugekehrte Kante zwischen dem Seitenschenkel (23) und dem Basisschenkel des Abdeckprofilabschnittes (22) abgeschrägt ist und
daß sich diese Abschrägung über die angebrachten Eckstücke (30) fortsetzt.

6. Sichtfenster nach einem der Ansprüche 1 bis 5,
dadurch gekennzeichnet,
daß die Eckstücke (30) auf den der Außenseite des Basisschenkels des Abdeckprofilabschnittes (22) zugekehrten Seiten sich bündig anschließen und sich über den abgeschrägten Übergangsbereich des Abdeckprofilabschnittes (22) verjüngen und entsprechend abgeschrägt sind.

7. Sichtfenster nach einem der Ansprüche 1 bis 6,
dadurch gekennzeichnet,
daß der Abdeckprofilabschnitt (22) im Bereich seines Basisschenkels über den Seitenschenkel (25) mit der Rastaufnahme (26) hinaus verlängert ist und eine Bohrung (29) aufweist.

8. Sichtfenster nach einem der Ansprüche 1 bis 7,
dadurch gekennzeichnet,
daß der Haltesteg (24) des Seitenschenkels (23) des Abdeckprofilabschnittes (22) nach dem Aufrasten des Abdeckprofilabschnittes (22) auf den Anschlußprofilabschnitt (17) bündig mit der dem Raststeg (19) abgekehrten Innenseite der Grundplatte (18) des Anschlußprofilabschnittes (17) abschließt.

9. Sichtfenster nach einem der Ansprüche 1 bis 8,
dadurch gekennzeichnet,
daß die Grundplatte (18) des Anschlußprofilabschnittes (17) über den Raststeg (17) und über die Verlängerung mit der durchgehenden Bohrung (29) des Basisschenkels des Abdeckprofilabschnittes (22) hinaus bis zum freien Rand der Seitenplatten (12,13) der Scheibe (10) verlängert ist und mit diesem bündig abschließt.

10. Sichtfenster nach einem der Ansprüche 1 bis 9,
dadurch gekennzeichnet,
daß die Außenseite des Basisschenkels des Abdeckprofilabschnittes (22) in gleichmäßigen Abständen längsgerichtete Nuten aufweist.

11. Sichtfenster nach einem der Ansprüche 1 bis 10,
dadurch gekennzeichnet,
daß in den Basisschenkel des Abdeckprofilabschnittes (22) des einen Rahmenteils der Verschluß eingesetzt ist, der einen Schließzylinder (39) mit Drehriegel (40) aufweist,
daß der Drehriegel (40) mit einem in einer die Öffnung (16) begrenzenden Seitenwand (33) festgelegten Schließbolzen (41) zusammenarbeitet,
daß in der Verlängerung des Basisschenkels des Abdeckprofilabschnittes (22) des anderen Rahmenteils Lagerbolzen (38) für winkelförmige Scharnierteile (36) eingebracht sind, die damit schwenkbar an dem Abdeckprofilabschnitt (22) gelagert sind, und
daß die Scharnierteile (36) an einer die Öffnung (16) begrenzenden Seitenwand (34) befestigt sind.

12. Sichtfenster nach einem der Ansprüche 1 bis 11,
dadurch gekennzeichnet,
daß die Anschlußprofilabschnitte (17) im Bereich ihrer Aufnahmenut (20) mit der Frontplatte (11) der Scheibe (10) verklebt sind.

13. Sichtfenster nach einem der Ansprüche 1 bis 11,
dadurch gekennzeichnet,
daß die Anschlußprofilabschnitte (17) im Bereich ihrer Aufnahmenut (20) mit Bohrungen versehen sind, die mit Bohrungen in der Frontplatte (11) der Scheibe (10) fluchten, und
daß die Frontplatte (11) der Scheibe (10) und der Anschlußprofilabschnitt (17) über die fluchtenden Bohrungen miteinander verbunden, vorzugsweise verstiftet oder verschraubt sind.

## Claims

1. Inspection window for an opening (16) in a switchgear cabinet or module carrier (15), having a U-shaped transparent plate (10) which comprises front panel (11) and two lateral panels (12, 13) and is connected to frame portions at at least the two end faces (14), characterised in that the frame portions each comprise a connecting profile portion (17) and a U-shaped covering profile portion (22), which is lockable thereon, the lengths of said portions corresponding to the clearance between the lateral panels (12, 13) of the plate (10), in that the connecting profile portion (17) has a receiving groove (20) for it to be mounted on the end face (14) of the front panel (11) of the plate (10), in that the connecting portion (17) and the locked-on covering profile portion (22) form a continuous elongate chamber (37), and in that corner pieces (30), which are provided with a receiving groove (31), are mounted on the end faces of the lateral panels (12, 13) of the plate (10), which corner pieces protrude, by means of retaining extensions (32), into the elongate chamber (37) of the frame portions and are retained therein.

2. Inspection window according to claim 1, characterised in that the connecting profile portion (17) comprises a base plate (18), which is provided with the receiving groove (20), formed by angular portions, on a longitudinal end, in that the opening in the receiving groove (20) lies substantially in the plane of the base plate (18), and in that the base plate (18) has a locking rib (19), which is moulded to fit in the region of the other longitudinal end, with a locking extension at its free end.

3. Inspection window according to claim 1 or 2, characterised in that the covering profile portion (22) engages, with a lateral arm (23), over the angular portion (21) of the receiving groove (20) situated on the front end of the front panel (11) of the plate (10) and engages, with a retaining rib (24), behind the end face thereof, and in that the other lateral arm (25) of the covering profile portion (22) has a locking receiver (26) for the locking extension of the locking rib (19) of the connecting profile portion (17).

4. Inspection window according to one of claims 1 to 3, characterised in that the covering profile portion (22) has a supporting rib (28), which is moulded to fit on its inner surface and is supported on the bottom angular portion of the receiving groove (20) in the connecting profile portion (17), and in that the lateral arm (25) is supported, by the locking receiver (26) of the covering profile portion (22), on the base plate (18) of the connecting profile portion (17) after locking with the locking rib (19) of the connecting portion (17).

5. Inspection window according to one of claims 1 to 4, characterised in that the edge facing the front end of the plate (10) is inclined between the lateral arm (23) and the bottom arm of the covering profile portion (22), and in that this inclination continues over the mounted corner pieces (30).

6. Inspection window according to one of claims 1 to 5, characterised in that the corner pieces (30) terminate flush with one another on the ends facing the outer surface of the bottom arm of the covering profile portion (22), they taper over the inclined transitional region of the covering profile portion (22), and they are inclined accordingly.

7. Inspection window according to one of claims 1 to 6, characterised in that the covering profile portion (22), in the region of its bottom arm, extends beyond the lateral arm (25) with the locking receiver (26) and has a bore (29).

8. Inspection window according to one of claims 1 to 7, characterised in that the retaining rib (24) of the lateral arm (23) of the covering profile portion (22) terminates flush with the inner surface of the base plate (18) of the connecting profile portion (17) remote from the locking rib (19) after the covering profile portion (22) has locked upon the connecting profile portion (17).

9. Inspection window according to one of claims 1 to 8, characterised in that the base plate (18) of the connecting profile portion (17) extends beyond the locking rib (19) and beyond the extension with the continuous bore (29) in the bottom arm of the covering profile portion (22) to the free edge of the lateral panels (12, 13) of the plate (10) and terminates flush with said edge.

10. Inspection window according to one of claims 1 to 9, characterised in that the outer surface of the bottom arm of the covering profile portion (22) has longitudinally orientated grooves formed therein at regular intervals.

11. Inspection window according to one of claims 1 to 10, characterised in that the closure is inserted into the bottom arm of the covering profile portion (22) of one frame portion and has a lock barrel (39) with a hasp (40), in that the hasp (40) co-operates with a cotter pin (41) secured in a lateral wall (33), which defines the opening (16), in that bearing pins (38) for angular hinges (36) are introduced into the extension of the bottom arm of the covering profile portion (22) of the other frame portion and are, in consequence, pivotably mounted on the covering profile portion (22), and in that the hinges (36) are mounted on a lateral wall (34), which defines the opening (16).

12. Inspection window according to one of claims 1 to 11, characterised in that the connecting profile portions (17) are adhered to the front panel (11) of the plate (10) in the region of their receiving groove (20).

13. Inspection window according to one of claims 1 to 11, characterised in that the connecting profile portions (17) are provided with bores in the region of their receiving groove (20), which bores are in alignment with bores in the front panel (11) of the plate (10), and in that the front panel (11) of the plate (10) and the connecting profile portion (17) are interconnected by means of the aligned bores, such interconnection preferably being effected by pins or screws.

**Revendications**

1. Fenêtre pour une ouverture (16) d'une armoire de commutation (15) ou d'un support de modules avec une vitre (10) transparente en forme de U constituée par un panneau frontal (11) et par deux panneaux latéraux (12, 13), vitre qui tout au moins le long des deux côtés frontaux (14) est reliée à des éléments de châssis,
caractérisée
en ce que les éléments de châssis sont chacun composés d'un tronçon profilé de raccordement (17) et d'un tronçon profilé de recouvrement (22) susceptible d'être encliqueté sur le tronçon profilé de raccordement (17), profilés dont les longueurs correspondent à la distance entre les faces intérieures des panneaux latéraux (12, 13) de la vitre (10),
en ce que le tronçon profilé de raccordement (17) présente une rainure de réception (20) pour l'enfichage sur le côté frontal (14) du panneau frontal (11) de la vitre (10),
en ce que le tronçon profilé de raccordement (17) et le tronçon profilé de recouvrement (22) forment une chambre longitudinale continue (37) et
en ce que sur les côtés frontaux des panneaux latéraux (12, 13) de la vitre (10) sont enfichées des pièces d'angle (30) présentant une rainure de réception (31), pièces d'angle qui par des épaulements de fixation (32) s'engagent dans la chambre longitudinale (37) des éléments de châssis et y sont maintenues.

2. Fenêtre suivant la revendication 1,
caractérisée
en ce que le tronçon profilé de raccordement (17) est constitué par une plaque de base (18), laquelle sur un côté longitudinal présente la rainure de réception (20) formé par des cornières,
en ce que l'ouverture de la rainure de réception (20) est située sensiblement dans le plan de la plaque de base (18), et
en ce que la plaque de base (18), dans la région de l'autre côté longitudinal, présente une traverse d'encliquetage (19) faisant partie intégrante de la plaque de base et portant un épaulement d'encliquetage à son extrémité libre.

3. Fenêtre suivant la revendication 1 ou la revendication 2,
caractérisée
en ce que le tronçon profilé de recouvrement (22) chevauche par une aile latérale (23) la cornière (21) de la rainure de réception (20), cornière qui est située sur le côté antérieur du panneau frontal (11) de la vitre (10) et s'engage par une traverse de fixation (24) son côté frontal et

en ce que l'autre aile latérale (22) présente une réception d'encliquetage (26) pour l'épaulement d'encliquetage de la traverse d'encliquetage (19) du tronçon profilé de raccordement (17).

4. Fenêtre suivant l'une quelconque des revendications de 1 à 3,
caractérisée
en ce que le tronçon profilé de recouvrement (22) présente sur son côté intérieur une traverse d'appui (29) qui y est formée, laquelle s'appuie sur la cornière de base de la rainure de réception (20) du tronçon profilé de raccordement (17) et
en ce que l'aile latérale (25) avec la réception d'encliquetage (26) du tronçon profilé de recouvrement (22), après l'encliquetage avec la traverse d'encliquetage (19) du tronçon profilé de raccordement (17), s'appuie sur la plaque de base (18) du tronçon profilé de raccordement (17)

5. Fenêtre suivant l'une quelconque des revendications de 1 à 4,
caractérisée
en ce que l'arête orientée vers le côté antérieur de la vitre (10) entre l'aile latérale (23) et l'aile de base du tronçon profilé de recouvrement (22) est biseautée et
en ce que ce biseau se prolonge sur les pièces d'angle (30) y montées.

6. Fenêtre suivant l'une quelconque des revendications de 1 à 5,
caractérisée
en ce que les pièces d'angle (30) se raccordent à fleur sur les côtés orientés vers le côté extérieur de l'aile de base du tronçon profilé de recouvrement (22) et amincissent le long de la région de transition biseautée du tronçon profilé de recouvrement (22) et sont biseautées de manière correspondante.

7. Fenêtre suivant l'une quelconque des revendications de 1 à 6,
caractérisée
en ce que dans la région de son aile de base , le tronçon profilé de recouvrement (22) se prolonge au-delà de l'aile latérale (25) avec le logement d'encliquetage (26) et présente une forure (29).

8. Fenêtre suivant l'une quelconque des revendications de 1 à 6,
caractérisée
en ce qu'après l'encliquetage du tronçon profilé de recouvrement (22) sur le tronçon profilé de raccordement (17), la traverse de fixation (24) de l'aile latérale (23) du tronçon profilé de recouvrement (22) est située à fleur avec côté intérieur de la plaque de base (18) opposé à la traverse d'encliquetage (19) du tronçon profilé de raccordement (17).

9. Fenêtre suivant l'une quelconque des revendications de 1 à 8,
caractérisée
en ce que la plaque de base (18) du tronçon profilé de raccordement (17) est prolongée au-delà de la traverse d'encliquetage (19) et au-delà du prolongement avec la forure continue (29) de l'aile de base du tronçon profilé de recouvrement (22) jusqu'au bord libre des panneaux latéraux (12, 13) de la vitre (10) et est terminée à fleur avec ce bord.

10. Fenêtre suivant l'une quelconque des revendications de 1 à 9,
caractérisée
en ce que le côté extérieur de l'aile de base du tronçon profilé de recouvrement (22) présente à des distances uniformes des rainures orientées longitudinalement.

11. Fenêtre suivant l'une quelconque des revendications de 1 à 10,
caractérisée
en ce que dans l'aile de base du tronçon profilé de recouvrement (22) d'un élément de châssis est monté le dispositif de fermeture, qui présente un cylindre de fermeture (39) avec un pêne rotatif (40),
en ce que le pêne rotatif (40) coopère avec un bouton de fermeture (41) assujetti dans une paroi latérale (33) délimitant l'ouverture (16),
en ce que dans le prolongement de l'aile de base du tronçon profilé de recouvrement (22) de l'autre élément de châssis sont prévus des boulons de palier pour des éléments angulaires de charnière (36) , lesquels sont par conséquent montés à pivotement sur le tronçon profilé de recouvrement (22), et
en ce que les éléments de charnière (36) sont fixés à une paroi latérale (34) délimitant l'ouverture (16).

12. Fenêtre suivant l'une quelconque des revendications de 1 à 11,
caractérisée
en ce que dans la région de leur rainure de réception (20), les tronçons profilés de raccordement (17) sont fixés par collage au panneau frontal (11) de la vitre (10).

13. Fenêtre suivant l'une quelconque des revendications de 1 à 12,
caractérisée
en ce que dans la région de leur rainure de réception (20), les tronçons profilés de raccordement (17) présentent des forures, qui sont en alignement avec des forures dans le panneau frontal (11) de la vitre (10), et
en ce que le panneau frontal (11) de la vitre (10) et le tronçon profilé de raccordement (17) sont reliés mutuellement par l'intermédiaire des forures en alignement, de préférence à l'aide de goujons ou de vis.

FIG.1

FIG.2

FIG.4

FIG.3